# EUROPÄISCHE PATENTSCHRIFT

(11) **EP 1 655 206 B1**
(45) Veröffentlichungstag und Bekanntmachung des Hinweises auf die Patenterteilung: **16.03.2011**
(21) Anmeldenummer: 05108258.4
(22) Anmeldetag: 08.09.2005
(51) Int. Cl.: B62D 15/02

(54) **Vorrichtung zur Unterstützung des Einparkvorgangs eines Fahrzeuges**
Parking assistant for parking a vehicle
Dispositif d'aide au stationnement d'un véhicule

(30) Priorität: 03.11.2004 DE 102004053158
(43) Veröffentlichungstag der Anmeldung: 10.05.2006
(73) Patentinhaber: Robert Bosch GmbH, 70442 Stuttgart (DE)
(72) Erfinder: Fehse, Meike, 71229, Leonberg (DE); Faber, Petko, 71229, Leonberg (DE)

(56) Entgegenhaltungen:
- WO-A-03/070517
- WO-A-2004/053812
- US-A1- 2004 210 350

## Beschreibung

Die Erfindung betrifft eine Vorrichtung zur Unterstützung des Einparkvorgangs bei Fahrzeugen nach dem Oberbegriff des Anspruchs 1.

### Stand der Technik:

Der zur Verfügung stehende Parkraum in Ballungszentren wird zunehmend enger und die Suche nach einer geeigneten Parklücke belastet den Fahrer zusätzlich zum immer dichter werdenden Verkehr. Hier kann zunächst die Funktion einer Parklückenlokalisierung (PSL = Parking Space Localization) dem Fahrer bei der Suche nach einer ausreichend großen Parklücke helfen. Anschließend kann ein semiautonomer Einparkassistent (SPA = Semiautonomous Parking Assistant) das zügige Einfahren in einer Parklücke unterstüzten. Somit werden lange und/oder erfolgslose Parkvorgänge vermeidbar.

Wurde eine passende Parklücke mittels der PSL-Funktionsmittel gefunden, wird von den SPA-Funktionsmittel in Abhängigkeit von der Parklückengeometrie eine optimale Einfahrbahn berechnet. Anschließend erhält der Fahrer vom System Informationen übermittelt, wie er zu lenken und Gas zu geben bzw. zu bremsen hat, um möglichst effizient in die Parklücke einzufahren. Gegebenenfalls erhält er eine automatische Lenkunterstützung.

Ein wichtiger Bestandteil sowohl der PSL-Funktionsmittel als auch der SPA-Funktionsmittel ist der exakte Bezug der aufgenommenen Wegdaten zum tatsächlich zurückgelegten Weg, insbesondere auch zur Richtung, in der sich das Fahrzeug bewegt. Normalerweise ist eine entsprechende Information über die Bewegungsrichtung, falls keine Richtungsinformation von entsprechende Information über die Bewegungsrichtung, falls keine Richtungsinformation von Radimpulszählern zur Verfügung steht, über den Getriebewählschalter abrufbar.

Problematisch wird dieses Vorgehen dann, wenn auch diese Informationen im Fahrzeug nicht verfügbar sind. In diesem Fall würde sich das eigene Fahrzeug um eine feststellbare Wegstrecke ohne Richtungsinformation bewegen. Um Kollisionen zu vermeiden, bleibt derzeit nur die Möglichkeit einer Deaktivierung des Systems.

Diesbezüglich ist aus der WO 2004/053812 A1 eine Einparkhilfe für ein Fahrzeug bekannt, die zur Erfassung von Parklücken bei einer Vorbeifahrt des Fahrzeugs an den Parklücken dient. Eigenschaften der Parklücken werden in einem Speicher abgelegt und Informationen zu den Parklücken werden in einer Ausgabeeinheit ausgegeben.

### Aufgabe und Vorteile der Erfindung:

Der Erfindung liegt die Aufgabe zugrunde, eine Vorrichtung der einleitend bezeichneten Art zur Verfügung zu stellen, die vergleichsweise höhere Zuverlässigkeit aufweist.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Vorrichtung zur Unterstützung des Einparkvorgangs bei Fahrzeugen mit am Fahrzeug angebrachten Abstandssensoren und einer Elektronikeinheit aus. Der Kern der Erfindung liegt nun darin, dass die Elektronikeinheit dazu ausgelegt ist, mittels der Abstandssensoren bei einem Einparkvorgang laufend Abstandsdaten bzw. charakteristische Kenngrößen in Bezug auf die Bewegung des Fahrzeugs zu speichern, die Rückschlüsse auf eine Kontur der Umgebung zulassen und für eine Situation, in welcher der Elektronikeinheit keine Information über die Bewegungsrichtung bei detektierter Bewegung des Fahrzeugs zur Verfügung stehen, die Bewegungsrichtung des Fahrzeugs durch in Bezug setzen von bis zum Wegfall der Richtungsinformation gespeicherten Abstandsdaten bzw. charakteristischen Kenngrößen mit ab dem Wegfall aufgenommenen Abstandsdaten bzw. charakteristischen Kenngrößen zu bestimmen.

Durch diese Maßnahme kann lediglich unter Einbeziehung der ohnehin im Gesamtsystem vorhandenen Abstandssensoren vergleichsweise einfach algorithmisch und damit weitgehend kostenneutral eine Dreh- bzw. Bewegungsrichtung abgeschätzt werden.

Bezug setzten der Abstandsdaten ausgelegt ist, wenn das Fahrzeug im Stillstand war und bei einer erneuten Bewegungsdetektierung keine Richtungsinformation der Bewegung vorliegt. Dies kann beispielsweise der Fall sein, wenn im ausgekuppelten Zustand das Fahrzeug nach vorne oder hinten rollt. Dann können Abstandsdaten bzw. charakteristische Kenngrößen vor dem Stillstand mit Abstandsdaten bzw. charakteristischen Kenngrößen nach dem Stillstand verglichen werden. Insbesondere ist es vorteilhaft Abstandsdaten bzw. charakteristische Kenngrößen miteinander zu vergleichen, die zum Stopppunkt die gleiche Entfernung haben.

Insbesondere vorteilhaft ist ein Datenvergleich bzw. Vergleich charakteristischer Kenngrößen durch eine einfache Differenzbildung. Dabei ist die Auswertung durch eine Differenzbildung zwischen gespeicherten Abstandsdaten bzw. charakteristischen Kenngrößen bis zum Richtungsinformationswegfall, insbesondere bis zum Stillstand des Fahrzeugs mit neu aufgenommenen Abstandsdaten bzw. charakteristischen Kenngrößen für eine Bewegung nach dem Stillstand möglich. Ist die Differenz zwischen beiden Datensätzen größer einer vorab definierten Schwelle liegt mit hoher Wahrscheinlichkeit eine Bewegung in der bisherigen Fahrtrichtung (z.B. Vorwärtsbewegung) vor. Ist die Differenz zwischen beiden Datensätzen kleiner einer vorab defmierten Schwelle, idealerweise Null, sind die beiden registrierten Bewegungen sehr ähnlich, womit mit hoher Wahrscheinlichkeit eine Bewegung entgegengesetzt der bisherigen Fahrtrichtung vorliegt (z.B. Rückwärtsbewegung). Zwangsläufig werden in diesem Fall die neu aufgenommenen Daten bzw. Kenngrößen mit den zuvor aufgenommenen Daten bzw. Kenngrößen des nun rückwärts befahrenen Weges weitgehend übereinstimmen.

In einer besonders bevorzugten Ausgestaltung der Erfindung ist die Elektronikeinheit zur temporären Speicherung der Abstandsdaten bzw. charakteristischen Kenngrößen ausgebildet. Beispielsweise steht ein Speicher bestimmter Größe zur Verfügung, bei welchem, wenn er voll beschrieben ist, die ältesten Daten von neu aufgenommenen Daten bzw. Kenngrößen überschrieben werden.

Bei der Speicherung der Abstandsdaten bzw. charakteristischen Kenngrößen kann es darüber hinaus bevorzugt sein, wenn die Elektronikeinheit Sensoren zugeordnete Abstandsdatentracks speichert. Dabei können beispielsweise die Abstandsdaten eines vorderen Seitensensors einen Datentrack bilden. Der Anfang und das Ende können dabei bestimmt werden, von dem ersten und letzten verwertbaren Abstandswert des Sensors.

Insbesondere abhängig von den Sensoren lassen sich derartige Tracks typisieren. Bei einer Richtungsbestimmung werden dann z.B. Tracks des gleichen Typs (oder nur Daten eines Tracks und damit eines Typs) verglichen. Beispielsweise fmdet ein Vergleich der Daten eines hinteren linken Seitenabstandssensors statt. Es werden vorzugsweise immer Abstandsdaten verglichen, die bei einem gleichen Abstand zu z.B. einem Haltepunkt des Fahrzeugs in Bezug auf den zurückgelegten Weg ermittelt sind. Der zurückgelegte Weg wird vorzugsweise von Radsensoren erfasst.

Im Weiteren ist es besonders bevorzugt, wenn für eine effektive Gewinnung von Abstandsdaten bzw. charakteristischen Kenngrößen aus den Abstandssensoren zwei sich unterscheidende Gruppen ausgewählt sind, wobei die erste Gruppe mit einem ersten Eingang eines Multiplexers und die zweite Gruppe mit einem zweiten Eingang des gleichen Multiplexers verbunden ist, und wobei die erste und zweite Gruppe jeweils einen Front- und Heckseitenabstandssensor für beide Seiten des Fahrzeugs umfasst. In diesem Zusammenhang ist es weiter bevorzugt, wenn die erste und zweite Gruppe wenigstens einen weiteren Front- und/oder Heck-Abstandssensor umfasst, der von den Seitenabstandssensoren verschieden ist und die untereinander verschieden sind.

Um eine hinreichende Zuverlässigkeit und Verfügbarkeit der SPA-Funktionsmittel gewährleisten zu können, müssen die PSL-Funktionsmittel die Lage und die Form (inklusive Länge und Breite) der Parklücke mit der notwendigen Genauigkeit mit hoher Wahrscheinlichkeit detektieren. Hierzu werden auf einer Seite ein seitlicher vorderer und ein seitlicher hinterer Abstandssensor eingesetzt. Der hintere Abstandssensor wird regelmäßig für eine größere Reichweite ausgelegt, um Objekte in einem erweiterten Bereich detektieren zu können (CSD = Curb Stone Detection). Parallel kann dieser Sensor zu Verifikation des PSL-Ergebnisses eingesetzt werden, das mit dem vorderen Abstandssensor durchgeführt wurde.

Durch eine Werterfassung von linken und rechten Seitenabstandssensoren in einem Multiplex-Abtastzyklus wird gleichzeitig die linke und rechte Seite des Fahrzeugs vermessen, womit eine höhere Kollisionssicherheit gegeben ist. Wenn gleichzeitig in jedem Multiplex-Schritt wenigstens ein weiterer insbesondere vorderer Abstandssensor für die Front hinzugenommen wird, steht obgleich der Rundumdetektion auch die Funktionalität "SPA" zur Verfügung. Regelmäßig sind neben jeweils einem linken und rechten Seitensensor an der Front und am Heck vier Sensoren zur Detektion in Fahrt- bzw. gegen die Fahrtrichtung vorgesehen. Sofern in jedem Multiplex-Schritt z.B. zwei weitere Frontabstandssenoren neben den Seitensensoren hinzugenommen werden, lassen sich in zwei Multiplex-Schritten alle vier Frontabstandssensoren für eine Vermessung einsetzten. Damit ist trotz eines Einsatzes der Seitensensoren die volle Funktionalität einer Einparkhilfe "SPA" für die Front bereitgestellt. Durch den Einsatz von Seitensensoren auf beiden Seiten lassen sich Abstände des Fahrzeugs zu der der Parklücke gegenüberliegenden Objekten, wie z.B. Fahrzeugen, Mauern, Bäume, Blumenkübel usw., die Hindernisse während des Einparkens darstellen können und somit während des Einparkvorgangs bei der Bahnplanung berücksichtigt werden sollten, detektieren und bestimmen.

Außerdem kann durch eine solche Aufteilung bzw. Gruppierung der Sensoren die höhere, z.B. doppelte oder dreifache Zykluszeit der als CSD-Sensoren ausgelegten hinteren seitlichen Sensoren berücksichtigt werden.

Ein Nachteil der bei jedem Multiplex-Schritt nur teilweise fortlaufenden Sensoren liegt allerdings darin, dass weniger Kreuzechos verifiziert werden können. Diesem Nachteil kann jedoch begegnet werden, indem bei einer weiteren vorteilhaften Ausgestaltung der Erfindung ein zweiter Multiplexer mit zwei Eingängen vorgesehen ist, wobei an einem ersten Eingang Frontabstandssensoren, vorzugsweise alle Frontabstandssensoren und an einem zweiten Eingang Heckabstandssensoren, vorzugsweise alle Heckabstandssensoren liegen. Dabei sollen jeweils die Front- und Heck-Seitensensoren mit eingeschlossen sein. Durch diese Ausgestaltung kann insbesondere für die überwiegende Benutzung der Einparkhilfe "SPA" auf den zweiten Multiplexer umgeschaltet werden, womit jeweils an Front und an Heck alle nebeneinanderliegenden Sensoren zum Einsatz kommen, was eine entsprechende Auswertung von Kreuzechos zulässt, die die Genauigkeit erhöht.

Regelmäßig sind an der Front des Fahrzeugs sechs und am Heck des Fahrzeugs sechs Abstandssensoren angeordnet, wovon jeweils zwei Abstandssensoren Seitenabstandssensoren sind.

### Zeichnungen:

Mehrere Ausführungsbeispiele der Erfindung sind in den Zeichnungen unter Angabe weiterer Vorteile und Einzelheiten im Folgenden nähere erläutert. Es zeigen
Figur 1 eine schematische Draufsicht auf einen PKW mit Anordnung von Abstandssensoren,
Figur 2a eine Draufsicht auf eine Einparksituation im Stadium der Parklückenvermessung,
Figur 2b aufgenommene Abstandskurven für die Seitensensoren für ein Vorbeifahren an der Parklücke,
Figur 2c aufgenommene Abstandskurven der Seitensensoren bei einem Zurückstoßen des Fahrzeugs auf Parklückenhöhe,
Figur 3a in Draufsicht eine Einparksituation in der Phase des Einfahrens in die Parklücke unter Nutzung der SPA-Funktionalität,
Figur 3b Abstandskurven der Seitensensoren für ein
   und 3c vollständiges rückwärts Hineinfahren (Figur 3b) bzw. für den Fall, dass das Fahrzeug aus der Parklücke wieder rausfährt (Figur 3c),
Figur 4 eine Draufsicht auf eine Parksituation, in welcher das Fahrzeug kurz vor der Beendigung des Einparkvorgangs steht,
Figur 5 in stark schematisierter Draufsicht die Anordnung von Abstandssensoren mit Hervorhebung der aktivierten Sensoren und
Figur 6 eine zu Figur 5 entsprechende Abbildung jedoch mit anderen aktivierten Abstandssensoren.

### Beschreibung der Ausführungsbeispiele:

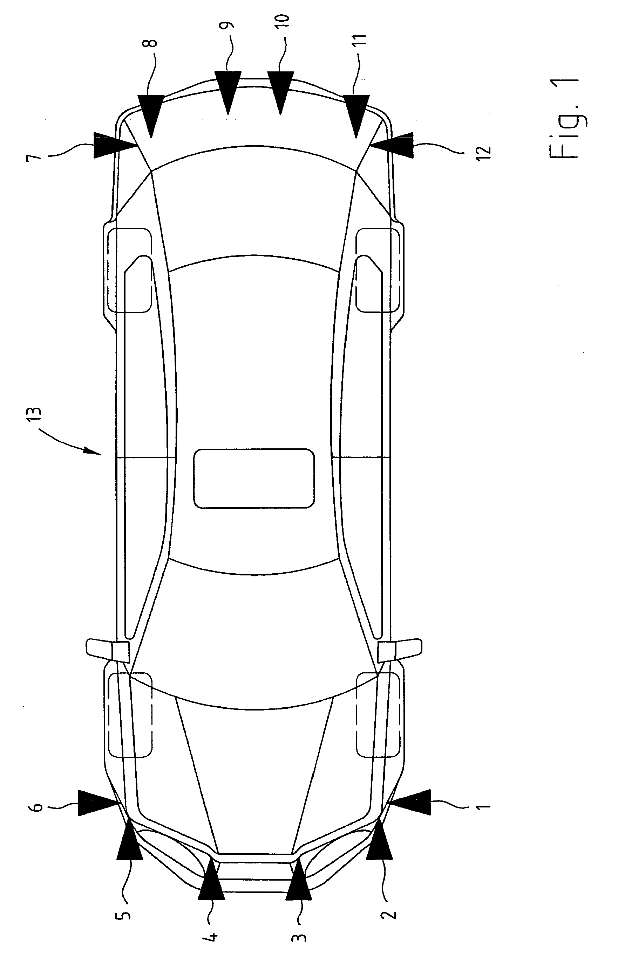

In Figur 1 ist in schematischer Darstellung die Position von Abstandssensoren 1 bis 12 an einem PKW 13 dargestellt. An der Front des PKWs 13 ist auf der linken und rechten Seite jeweils ein seitlicher Abstandssensor 1, 6. Des Weiteren sind vier Frontabstandssensoren 2 bis 5 untergebracht. Am Heck des Fahrzeugs 13 befinden sich auf der linken und rechten Seite jeweils ein seitlicher Heckabstandssensor 7, 12 sowie vier Heckabstandssensoren 8 bis 11.

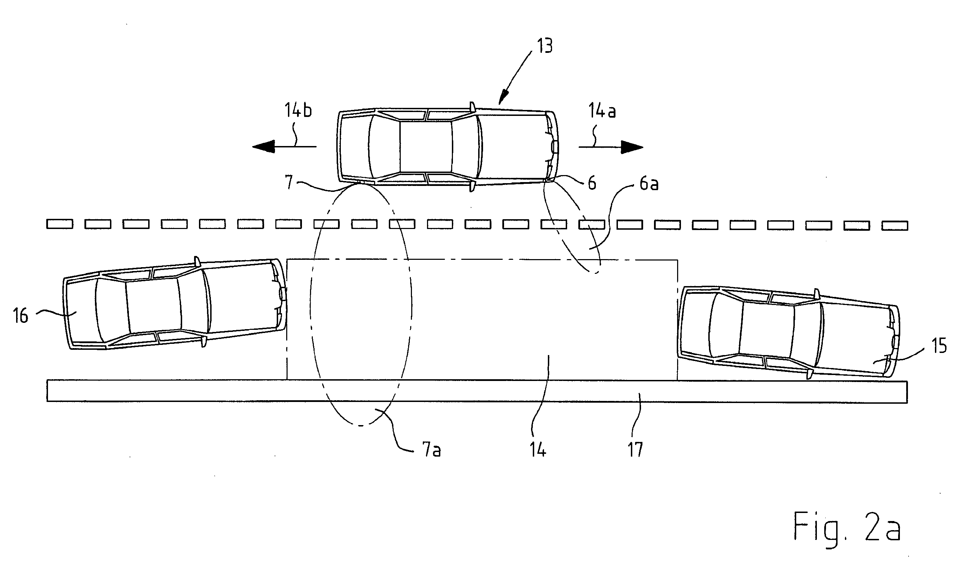

In Figur 2a ist eine Einparkszene des Fahrzeugs 13 in eine Parklücke 14 zwischen zwei parkenden PKWs 15, 16 entlang einem Bordstein oder einem ähnlichen, eine Parklücke begrenzenden Objekt 17 abgebildet. Der Detektionsbereich der Seitensensoren 6, 7 ist durch Detektionskeulen 6a, 7a symbolisiert.

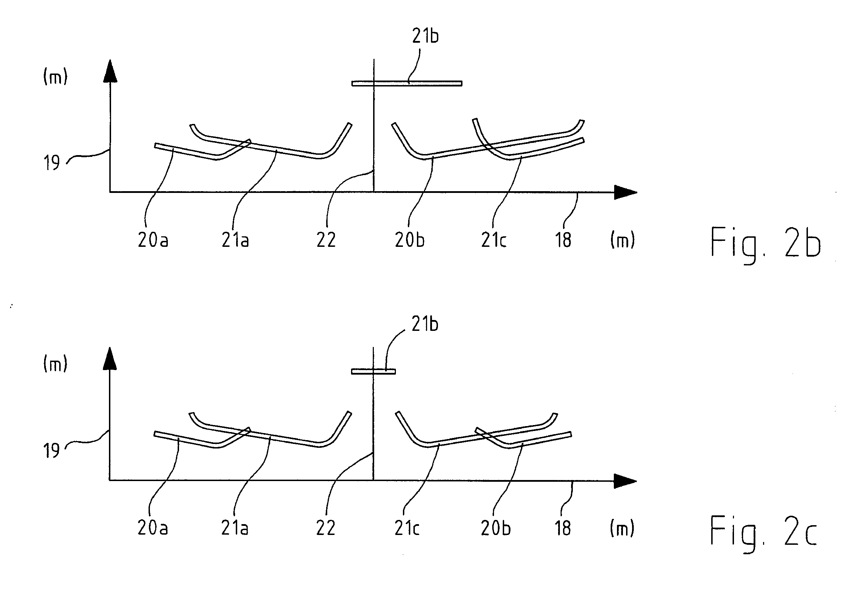

In Figur 2b sind die von den Sensoren 6, 7 bestimmten Abstandskurven bei einer Vorbeifahrt des PKWs 13 an der Parklücke 14 dargestellt. Auf der Abszisse 18 ist der zurückgelegte Weg z.B. in Metern aufgetragen, wohingegen auf der Ordinate 19 der von den seitlichen Abstandssensoren gemessene Abstand in z.B. Meter aufgetragen ist. Dementsprechend kommt beim Vorbeifahren an der Parklücke 14 zunächst der seitliche Frontabstandssensor 6 zum Einsatz und erzeugt einen Kurvenabschnitt 20a. Im Bereich der Parklücke lückt das Signal dieses Sensors, da er nur eine begrenzte Reichweite hat. Erst im Bereich des parkenden PKWs 15 trifft die Detektionskeule 6a auf diesen, wodurch sich der Kurvenabschnitt 20b ergibt. Für den seitlichen Hecksensor 7 sieht die Situation anders aus, da er eine deutlich größere Reichweite besitzt. Es ergeben sich beim Vorbeifahren an der Parklücke 14 in Richtung des Pfeils 14a die Kurvenabschnitte 21a, 21b sowie 21c. Durch eine Verschattung des Sensorsignals aufgrund der Fahrzeuge 16, 15 weist auch diese Kurve vor bzw. nach dem Kurvenstück 21b jeweils eine Unterbrechung auf. Das Kurvenstück 21b entspricht dem geraden Verlauf des Bordsteins 17. Die Kurvenstücke 21a und 21c entsprechend der Silhouette der parkenden Autos 16, 15.

In Figur 2c ist die Situation dargestellt, wenn genau in der Position des Fahrzeugs 13 gemäß Figur 2a keine Fahrt nach vorne entsprechend des Pfeils 14a fortgeführt wird, sondern das Fahrzeug 13 sich gemäß dem Pfeil 14b zurückbewegt. Die Umkehrstelle ist im Diagramm nach 2c durch die Linie 22 verdeutlicht. Die Linie wurde auch im Diagramm 2b übernommen. Im Diagramm 2a ist schön erkennbar, dass nunmehr die Kurvenabschnitte 20a und 20b für den Sensor 6 als auch die Kurvenabschnitte 21a, 21b, 21c des Sensors 7 zum durch die Linie 22 symbolisierten Umkehrpunkt im Wesentlichen symmetrisch verlaufen.

Würde an dem durch die Linie 22 symbolisierten Umkehrpunkt ein Richtungssignal für die Fahrtrichtung des PKWs 13 fehlen, ließe sich durch einen Vergleich der Kurven für den jeweiligen seitlichen Abstandssensor 6, 7 vor und nach dem Umkehrpunkt z.B. durch eine Differenzbildung ein Wert nahe Null ermitteln, was darauf hindeuten würde, dass sich das Fahrzeug rückwärts bewegt.

Im anderen Fall gemäß Figur 2b sind die zu den Abstandssensoren zugeordneten Kurvenabschnitte im Wesentlichen unsymmetrisch zur Linie 22, die den Umkehrpunkt symbolisiert, weshalb eine Differenzbildung hier Werte vergleichsweise deutlich verschieden von "Null" liefern würde, wodurch man daraus ersehen könnte, dass sich das Fahrzeug in Fahrtrichtung bewegen muss.

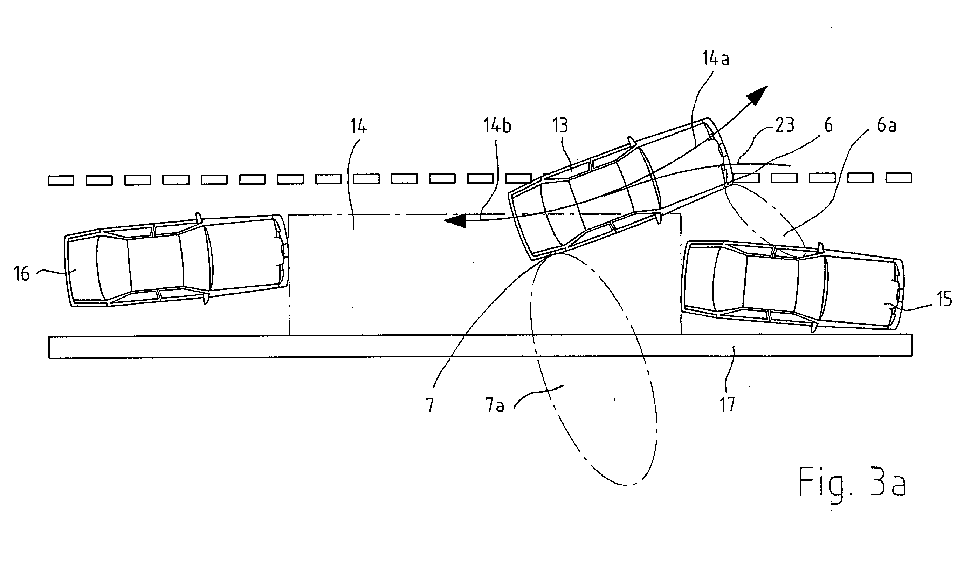

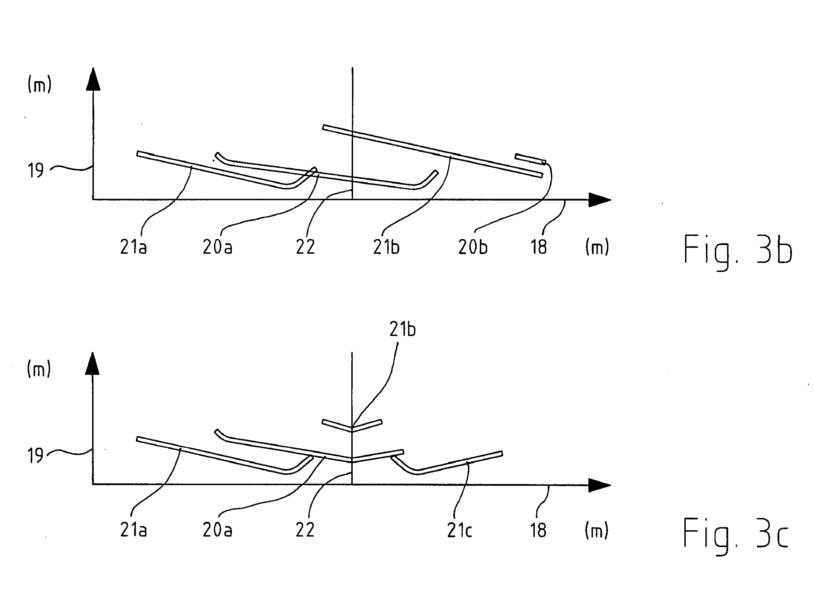

Eine entsprechende Feststellung der Fahrtrichtung lässt sich auch in der Phase des Einparkens, d.h. unter Ausnutzung der SPA-Funktionsmittel durchführen, wenn sich das Fahrzeug z.B. auf der Kurve 23 (siehe Figur 3a) teilweise in die Parklücke 14 hineinbewegt hat, und dann anhält. In den Diagrammen 3b, 3c wird dies wiederum durch die Linie 22 symbolisiert. In Figur 3b ist die Situation dargestellt, wenn die Einfahrtrichtung nach hinten auch nach der Stoppstelle beibehalten wird. Es ist deutlich ersichtlich, dass die Abstandskurven zur symbolischen Linie 22 sowohl für die Abstandswertkurven 20a, 20b des Sensors 6 als auch die Abstandswertkurven 21 a, 22b des Sensors 7 stark unsymmetrisch sind.

Anders verhält es sich, wenn nach dem Stillstand das Fahrzeug entlang des Pfeiles 14a aus der Parklücke 14 hinausfährt. Da in diesem Fall von den Detektoren ähnliche Abstandswerte detektiert werden, stellt sich ein zur Linie 22 symmetrisches Bild ein. Auch in diesem Fall kann ein Vergleich der Daten bis zur Stoppstelle mit den Daten ab der Stoppstelle Aufschlüsse über die Richtung geben. Im Fall des Diagramms nach Figur 3a werden sich bei einer Differenzbildung von zusammengehörigen Kurvenabschnitten eines Sensors Werte einstellen, die regelmäßig über einem Schwellwert liegen werden, der sich ergibt, wenn die Kurvenabschnitte eines Sensors im Fall der Figur 3b verglichen werden.

Dementsprechend kann sofern die Differenzbildung Werte liefert, die unter einem vorgegebenen Schwellwert liegen, darauf geschlossen werden, dass sich das Fahrzeug entgegen der zunächst bis zum Stopppunkt gegebenen Fahrtrichtung bewegt, wobei im anderen Fall angenommen werden darf, d.h. in dem Fall, in dem Differenzwerte über einem vorgegebenen Schwellwert liegen, dass das Fahrzeug die Richtung nicht geändert hat.

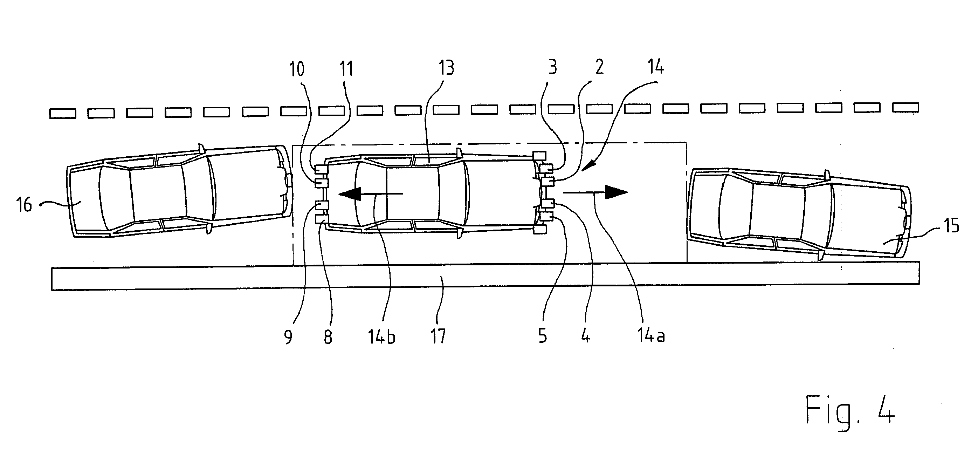

Figur 4 stellt in einer schematischen Draufsicht die Situation dar, in welcher sich in einer Phase 2 des Einparkvorgangs unter Nutzung der SPA-Funktionsmittel das Fahrzeug 13 zwar vollständig in der Parklücke 14 befindet, jedoch eine Endposition noch nicht erreicht hat.

Für den Fall, dass das Fahrzeug 13 in der in Figur 4 dargestellten Position hält und sich dann wieder in Bewegung setzt, ohne dass jedoch von den herkömmlichen Sensoren eine Richtungsinformation vorliegt, lässt sich die Richtung wiederum durch einen Vergleich der Abstandswerte z.B. der vorderen Abstandssensoren bis zum Haltepunkt mit den Abstandswerten nach dem Haltepunkt bestimmen.

Hat sich das Fahrzeug 13 bis zum Haltepunkt rückwärts bewegt und bewegt sich ab dem Haltepunkt wiederum rückwärts in Richtung des Pfeils 14b, werden sich die Abstandswerte vergrößern, wodurch sich bei einer Differenzbildung die Werte nicht aufheben und daher jedes Ergebnis, das über einem vorgegebenen Schwellwert liegt, auf eine Rückwärtsfahrt schließen lässt.

Setzt sich das Fahrzeug von der in Figur 4 eingezeichneten Position nach einer Rückwärtsfahrt in Richtung des Pfeils 14b bis zu dieser Stelle in entgegengesetzte Richtung nach vorne in Bewegung, werden sich Abstandswerte verkleinern, wodurch eine Differenzbildung der Werte bis zur Halteposition gemäß Figur 4 idealerweise Werte im Bereich von "Null" liefern wird.

Bei der Auswertung kann somit jedes Ergebnis, das bei einem Vergleich von Abstandswerten vor und nach einem Haltepunkt unter einem vorgegebenen Schwellwert liegt als Fahrt in die bis zum Haltepunkt entgegengesetzte Richtung gedeutet werden, wohingegen Ergebniswerte über dem Schwellwert sich einer Fahrt in der gleichen Richtung zuordnen lassen.

Im Fall von Figur 4 können für einen Wertevergleich z.B. die Werte der vorderen Abstandssensoren 2, 3, 4, 5 oder die Werte der hinteren Abstandssensoren 8, 9, 10, 11 kommutativ herangezogen werden.

Es ist auch denkbar die Werte von Einzelsensoren auszuwerten.

Um eine hinreichende Zuverlässigkeit und Verfügbarkeit der SPA-Einparkhilfe gewährleisten zu können, müssen die PSL-Funktionsmittel Lage und Form der Parklücke mit der notwendigen Genauigkeit detektieren können. Auf der Basis einer bekannten Sensorarchitektur ist nur eine eingeschränkte Nutzung der seitlich ausgerichteten Sensoren 1, 12 bzw. 6, 7 möglich, da regelmäßig 12 Sensoren des Steuergeräts über einen Multiplexer angesteuert werden, wonach entweder alle 6 Frontsensoren 1 bis 6 oder alle 6 Hecksensoren 7 bis 12 in der Lage sind, zu senden oder zu empfangen.

Durch den Einsatz von zwei Multiplexern mit jeweils zwei Eingängen, die ihrerseits z.B. situationsbedingt, d.h. abhängig von der Einparkphase ansprechbar sind, gegebenenfalls auch über einen weiteren Multiplexer, lässt sich eine Zusammenfassung von Abstandssensoren verwirklichen, die eine höhere Zuverlässigkeit des Systems ermöglicht.

Im Folgenden nun drei Beispiele, wie die Sensoren in Bezug auf die beiden Multiplexer an jeweiligen Eingang A und B eines Multiplexers zusammengefasst werden können:

### Variante 1:

Die Sensoren 1, 3, 4, 6, 7 und 12 liegen am Eingang A des ersten Multiplexers, wobei die Sensoren 1, 2, 5, 6, 7 und 12 mit dem Eingang B des ersten Multiplexers verbunden sind. Die Sensoren 1 bis 6 sind außerdem mit dem Eingang A des zweiten Multiplexers und die Sensoren 7 bis 12 mit dem Eingang B des zweiten Multiplexers verbunden.

Damit kann insbesondere bei der Erfassung der Parklückengröße und der Vermessung eines Bordsteins eine höhere Sicherheit erzielt werden, da gleichzeitig die linke und rechte Seite am Fahrzeug vermessen wird. Währendessen ist immer noch eine Grundfunktionalität der Einparkhilfe realisierbar, da die Frontsensoren 3, 4 bzw. 2, 5 beim "Multiplexen" angesprochen werden.

Durch die aufgezeigte Gruppierung bzw. Cluster-Bildung der Abstandssensoren erkauft man sich jedoch den geringfügigen Nachteil, dass bei Aktivierung des ersten Multiplexers mit der entsprechenden Gruppenbildung der Abstandssensoren weniger Kreuzechos zur Auswertung zur Verfügung stehen, als dies bei einer herkömmlichen Gruppenbildung von Front- und Hecksensoren der Fall ist. Durch das Heranziehen des zweiten Multiplexers, bei welchem eine solche Gruppierung definiert ist, kann jedoch auch auf diese Funktionalität zurückgegriffen werden, insbesondere wenn es darum geht, die SPA-Funktionsmittel zu nutzen, in einer Phase, in welcher sich das Fahrzeug zumindest teilweise in der Parklücke befindet.

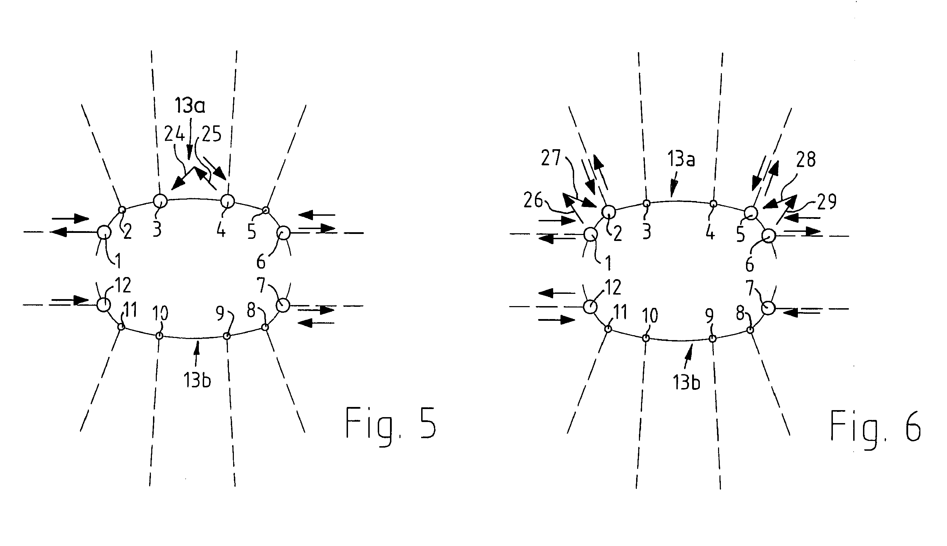

Für die Variante 1 sind in den Figuren 5 und 6 die am ersten Multiplexer zusammengefassten "Cluster" von Abstandssensoren für den Eingang A (Figur 5) und den Eingang B (Figur 6) anhand der schematischen Anordnung der Abstandssensoren an der Frontseite 13a und am Heck 13b eines Fahrzeugs veranschaulicht. Die bei einem Multiplex-Schritt jeweils aktivierten Sensoren sind gegenüber den nicht aktiven Sensoren vergrößert dargestellt.

Die prinzipielle Abstrahlrichtung der Abstandssensoren 1 bis 12 ist durch jeweils eine gestrichelte Linie Symbolisiert.

Wie man in Figur 5 erkennen kann, kann kein Kreuzecho zwischen den Sensoren 2 und 3 bzw. 4 und 5 ausgewertet werden, da in dieser Phase die Abstandssensoren 2 und 5 nicht aktiv sind. Hingegen ist eine Auswertung eines Kreuzechos zwischen den Abstandssensoren 3 und 4 möglich. Die verbleibenden aktiven Sensoren lassen sich im Hinblick auf ein Direktecho auswerten.

Das Kreuzecho ist durch die Pfeile 24 und 25 in Figur 5 symbolisiert.

Sofern das zweite Cluster am Eingang B des ersten Multiplexers aktiv ist (Figur 6), lassen sich Kreuzechos zwischen dem ersten und zweiten Abstandssensor und dem fünfen und sechsten Abstandssensor auswerten (siehe Pfeile 26, 27 bzw. 28, 29). Im Übrigen sind durch die Pfeile in Figur 5 und 6 die Direktechos schematisiert dargestellt.

Zwei weitere vorteilhafte Anordnungen sehen folgende Cluster-Bildungen bei den Multiplexern vor:

### Variante 2:

Die Sensoren 1, 2, 3 , 6, 7 und 12 sind am Eingang A des ersten Multiplexers und die Sensoren 1, 4, 5, 6, 7 und 12 am Eingang B des ersten Multiplexers angeschlossen, wobei die Sensoren 1 bis 6 am Eingang A des zweiten Multiplexers und die Sensoren 7 bis 12 mit dem Eingang B des zweiten Multiplexers verbunden sind.

### Variante 3:

Die Sensoren 1, 2, 4, 6, 7 und 12 stehen in Verbindung mit dem Eingang A des ersten Multiplexers. Außerdem sind die Sensoren 1, 3, 5, 6, 7 und 12 am Eingang B des ersten Multiplexers angeschlossen. Die Sensoren 1 bis 6 liegen am Eingang A des zweiten Multiplexers und die Sensoren 7 bis 12 am Eingang B des zweiten Multiplexers.

Durch diese Varianten wird jeweils eine Grundfunktionalität für die "Fronteinparkhilfe" bereitgestellt. Es sind auch noch andere Cluster-Bildungen denkbar, bei welchen Hecksensoren mit eingebunden werden.

## Patentansprüche

1. Vorrichtung zur Unterstützung des Einparkvorgangs bei Fahrzeugen mit am Fahrzeug (13) angebrachten Abstandssensoren (1 bis 12) und einer Elektronikeinheit, **dadurch gekennzeichnet, dass** die Elektronikeinheit dazu ausgelegt ist, mittels der Abstandssensoren (1 bis 12) bei einem Einparkvorgang laufend Abstandsdaten bzw. charakteristische Kenngrößen in Bezug auf die Bewegung des Fahrzeugs (13) zu speichern, die Rückschlüsse auf eine Kontur der Umgebung zulassen und für eine Situation, in welcher der Elektronikeinheit keine Information über die Bewegungsrichtung bei detektierter Bewegung des Fahrzeugs (13) zur Verfügung steht, die Bewegungsrichtung des Fahrzeugs (13) durch in Bezug setzten von bis zum Wegfall der Richtungsinformation gespeicherten Abstandsdaten bzw. charakteristischen Kenngrößen mit ab dem Wegfall aufgenommenen Abstandsdaten bzw. charakteristischen Kenngrößen zu bestimmen.

2. Vorrichtung nach Anspruch 1, **dadurch gekennzeichnet, dass** die Elektronikeinheit zum in Bezug setzen der Abstandsdaten bzw. charakteristischen Kenngrößen ausgelegt ist, wenn das Fahrzeug (13) im Stillstand war und bei Fortsetzten der Bewegung keine Richtungsinformation der Bewegung vorliegt.

3. Vorrichtung nach einem der vorhergehenden Ansprüche, **dadurch gekennzeichnet, dass** das in Bezug setzen der Abstandsdaten bzw. charakteristischen Kenngrößen eine Differenzbildung der Daten umfasst.

4. Vorrichtung nach einem der vorhergehenden Ansprüche, **dadurch gekennzeichnet, dass** die Elektronikeinheit zur temporären Speicherung der Abstandsdaten bzw. charakteristischen Kenngrößen ausgebildet ist.

5. Vorrichtung nach einem der vorhergehenden Ansprüche, **dadurch gekennzeichnet, dass** die Elektronikeinheit dazu ausgelegt ist, Sensoren zugeordnete Abstandsdaten-Tracks zu speichern.

6. Vorrichtung nach einem der vorhergehenden Ansprüche, **dadurch gekennzeichnet, dass** aus den Abstandssensoren zwei sich unterscheidende Gruppen ausgewählt sind, wobei die erste Gruppe mit einem ersten Eingang eines Multiplexers und die zweite Gruppe mit einem zweiten Eingang des gleichen Multiplexers verbunden ist und wobei die erste Gruppe und zweite Gruppe jeweils einen Front- und Heck-Seitenabstandssensor (1, 6, 7, 12) für beide Seiten des Fahrzeugs (13) umfasst.

7. Vorrichtung nach Anspruch 6, **dadurch gekennzeichnet, dass** die erste und zweite Gruppe wenigstens einen weiteren Front- und/oder Heckabstandssensor (2, 3; 4, 5) umfasst, der von den Seitenabstandssensoren (1, 6, 7, 12) verschieden ist, und die untereinander verschieden sind.

8. Vorrichtung nach einem der Ansprüche 6 oder 7, **dadurch gekennzeichnet, dass** ein zweiter Multiplexer mit zwei Eingängen vorgesehen ist, wobei am ersten Eingang Frontabstandsensoren (1- 6) und am zweiten Eingang Heckabstandssensoren (7 -12) liegen.

## Claims

1. Device for assisting the parking process in vehicles having distance sensors (1 to 12) mounted on the vehicle (13) and an electronic unit, **characterized in that** the electronic unit is configured to continuously store distance data and/or characteristic variables in relation to the movement of the vehicle (13) by means of the distance sensors (1 to 12) during a parking process, which data and/or variables permit conclusions to be drawn about a contour of the surroundings, and to determine the direction of movement of the vehicle (13) for a situation in which no information about the direction of movement is available to the electronic unit when movement of the vehicle (13) is detected, by forming a relationship between distance data and/or characteristic variables stored up to the point when the direction information discontinues and distance data and/or characteristic variables which are recorded starting from the time when it discontinues.

2. Device according to Claim 1, **characterized in that** the electronic unit is configured to form a relationship with respect to the distance data and/or characteristic variables if the vehicle (13) was in a stationary state and no direction information about the movement is present when the movement continues.

3. Device according to one of the preceding claims, **characterized in that** the formation of a relationship with respect to the distance data and/or characteristic variables comprises formation of differences for the data.

4. Device according to one of the preceding claims, **characterized in that** the electronic unit is designed to temporarily store the distance data and/or characteristic variables.

5. Device according to one of the preceding claims, **characterized in that** the electronic unit is configured to store distance data tracks assigned to sensors.

6. Device according to one of the preceding claims, **characterized in that** two differing groups are selected from the distance sensors, wherein the first group is connected to a first input of a multiplexer, and the second group is connected to a second input of the same multiplexer, and wherein the first group and the second group each comprise a lateral, front-mounted and rear-mounted distance sensor (1, 6, 7, 12) for both sides of the vehicle (13).

7. Device according to Claim 6, **characterized in that** the first and second groups comprise at least one further front-mounted and/or rear-mounted distance sensor (2, 3; 4, 5), which is different from the lateral distance sensors (1, 6, 7, 12), which lateral distance sensors (1, 6, 7, 12) are different from one another.

8. Device according to one of Claims 6 or 7, **characterized in that** a second multiplexer is provided with two inputs, wherein front-mounted distance sensors (1-6) are present at the first input, and rear-mounted distance sensors (7-12) are present at the second input.

## Revendications

1. Dispositif d'assistance aux manoeuvres de stationnement d'un véhicule, qui présente des détecteurs de distance (1 à 12) placés sur le véhicule (13) ainsi qu'une unité électronique,
**caractérisé en ce que**
l'unité électronique est conçue pour conserver en permanence en mémoire pendant une manoeuvre de stationnement des données de distance ou des grandeurs caractéristiques concernant le déplacement du véhicule (13) obtenues au moyen des détecteurs de distance (1 à 12), pour tirer des conclusions sur un contour de l'environnement et pour, dans des situations dans lesquelles l'unité électronique ne dispose pas d'informations sur la direction de déplacement alors qu'un déplacement du véhicule (13) a été détecté, déterminer la direction des déplacements du véhicule (13) en mettant en relation des données de distance ou des grandeurs caractéristiques conservées en mémoire jusqu'à la disparition de l'information de direction avec des données de distance ou des grandeurs caractéristiques enregistrées depuis cette disparition.

2. Dispositif selon la revendication 1, **caractérisé en ce que** l'unité électronique est conçue pour mettre en relation les données de distance ou les grandeurs caractéristiques lorsque le véhicule (13) était à l'arrêt et qu'aucune information de direction du déplacement n'est présente alors que le déplacement se poursuit.

3. Dispositif selon l'une des revendications précédentes, **caractérisé en ce que** la mise en relation des données de distance ou des grandeurs caractéristiques comprend la formation de la différence entre les données.

4. Dispositif selon l'une des revendications précédentes, **caractérisé en ce que** l'unité électronique est configurée pour conserver temporairement en mémoire les données de distance ou les grandeurs caractéristiques.

5. Dispositif selon l'une des revendications précédentes, **caractérisé en ce que** l'unité électronique est conçue pour conserver en mémoire une trace des données de distance associées aux détecteurs.

6. Dispositif selon l'une des revendications précédentes, **caractérisé en ce que** deux groupes différents l'un de l'autre sont sélectionnés parmi les détecteurs de distance, le premier groupe étant relié à une première entrée d'un multiplexeur et le deuxième groupe à une deuxième entrée du même multiplexeur, le premier groupe et le deuxième groupe comprenant chacun un détecteur latéral de distance avant et un détecteur latéral de distance arrière (1, 6, 7, 12) prévus chacun sur un des deux côtés du véhicule (13).

7. Dispositif selon la revendication 6, **caractérisé en ce que** le premier et le deuxième groupe comprennent au moins un autre détecteur de distance avant et/ou un autre détecteur de distance arrière (2, 3; 4, 5) différents des détecteurs de distance latéraux (1, 6, 7, 12) différents l'un de l'autre.

8. Dispositif selon l'une des revendications 6 ou 7, **caractérisé en ce qu'**il présente un deuxième multiplexeur doté de deux entrées, les détecteurs (1-6) de distance avant étant appliqués sur la première entrée et les détecteurs (7-12) de distance arrière sur la deuxième entrée.
